(19) Europäisches Patentamt
European Patent Office
Office européen des brevets

(11) Publication number: 0 196 454 B1

(12) **EUROPEAN PATENT SPECIFICATION**

(45) Date of publication of patent specification: **06.06.90**

(51) Int. Cl.[5]: **C 07 B 43/04**, C 07 C 209/62, C 07 C 227/18, C 07 C 321/14, C 07 C 229/02

(21) Application number: **86102448.7**

(22) Date of filing: **25.02.86**

(54) **Process for removing an amino protecting group.**

(30) Priority: **28.02.85 JP 39982/85**

(43) Date of publication of application:
**08.10.86 Bulletin 86/41**

(45) Publication of the grant of the patent:
**06.06.90 Bulletin 90/23**

(84) Designated Contracting States:
**DE FR GB IT**

(56) References cited:
**EP-A-0 013 663**

**ANGEWANDTE CHEMIE, INTERNATIONAL EDITION IN ENGLISH, vol. 23, no. 5, 1984, pages 436-437, Verlag Chemie GmbH, Weinheim, DE; H. KUNZ et al.: "The allyloxycarbonyl (Aloc) moiety - Conversion of an unsuitable into a valuable amino protecting group for peptide synthesis"**

**The file contains technical information submitted after the application was filed and not included in this specification**

(73) Proprietor: **NIPPON ZEON CO., LTD.**
**6-1, 2-chome, Marunouchi, Chiyoda-ku**
**Tokyo (JP)**

(72) Inventor: **Tsuji, Jiro**
**602-128, Tsu Kamakura-shi**
**Kanagawa-ken (JP)**

(74) Representative: **Kraus, Walter, Dr. et al**
**Patentanwälte Kraus, Weisert & Partner**
**Thomas-Wimmer-Ring 15**
**D-8000 München 22 (DE)**

(56) References cited:

**TETRAHEDRON LETTERS, vol. 26, no. 20, 1985, pages 2449-2452, Pergamon Press Ltd., Oxford, GB; I. MINAMI et al.: "Palladium-catalyzed reaction of allyl carbamates; allylation of carbonucleophiles, and protection-deprotection of amines"**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 196 454 B1

## Description

This invention relates to a process wherein an amino group protected with a 2-alkenyloxycarbonyl group is deprotected in good efficiency.

In a variety of organic synthesis reactions including synthesis of peptides or glycoproteins, the amino group in the starting compound has been often protected in a form inert to the reaction. As a method that enables deprotection under relatively moderate conditions, a method has been lately developed wherein an allyloxycarbonyl group is introduced into an amino group and the resulting protected amino group is then deprotected with a palladium catalyst in the presence of a nucleophilic reagent such as 5,5-dimethyl-1,3-cyclohexanedione (hereinafter called "Dimedone") or 2-ethylhexanoic acid (Agnew. Chem. Int. Ed. Engl. 23, 436, 1984; U.S. Patent 4,314,942).

The above method however can hardly separate final products because Dimedone or 2-ethylhexanoic acid is allylated to form high-boiling by-products, and requires costly reagents, posing an economical problem.

The present inventors have therefore made extensive studies to eliminate such defects of the prior art and consequently found that the use of formic acid or salts thereof is effective. This finding has led to completion of the present invention.

This invention relates to a process for the removal of the N-protecting group in compounds having one or more primary or secondary amino groups protected with a 2-alkenyl-oxycarbonyl group via a palladium catalyzed reaction which is characterized in that the protected amino compound is deprotected in contact with a zero-valent complex or a divalent organic compound of palladium as a catalyst in the presence of formic acid or salts thereof.

The protected amino compound used in this invention is a compound wherein a primary or secondary amino group in a molecule is protected with a 2-alkenyloxycarbonyl group. Any 2-alkenyloxycarbonyl group is suitable if it is commonly used as a protective group. Usually, said group is a group represented by formula

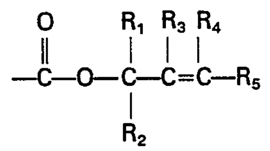

wherein $R_1$, $R_2$, $R_3$, $R_4$ and $R_5$ each denote a hydrogen atom or a hydrocarbon residue that may have a substituent.

Concrete examples of the 2-alkenyl group of the 2-alkenyloxycarbonyl group include an allyl group, a methallyl group, a crotyl group, a prenyl group, a 2-pentenyl group, a 2-ethyl-2-butenyl group, a cinnamyl group, a p-chlorocinnamyl group, a geranyl group, a neryl group and lower alkoxy derivatives of these groups.

The number of carbon atoms of the 2-alkenyl group may properly be selected taking account of the separation of alkenes formed after the reaction and the ease of obtaining the starting material. Usually, a 2-alkenyl group having not more than 10 carbon atoms is adopted. In case of a 2-alkenyl group having not more than 5 carbon atoms, by-product alkenes can be removed outside the system in gaseous state.

One protective group in a molecule is commonly used, but the number of the protective groups is not limited thereto. Two or more protective groups may be also introduced.

Meanwhile, examples of the amino compound to be deprotected (i.e. a compound wherein the protective group is replaced with a hydrogen atom) may be any amino compounds if they have a primary or secondary amino group, including aliphatic amino compounds, alicyclic amino compounds, aromatic amino compounds and heterocyclic amino compounds. One or more reactive sites such as a carbon-carbon double bond, a carbon-carbon triple bond, a carboxyl group, a hydroxyl group, a thiol group, a carbonyl group, an epoxy group, a nitrile group, a sulfonyl group, a sulfone group, an ester linkage, an ether linkage, thioether linkage, an acetal linkage or a chlorine atom may be contained in the molecule.

The molecular weight of such an amino compound is, though not exerting a big influence on the reaction, usually 5,000 or less, and the number of carbon atoms of the amino compound is usually 100 or less, more preferably 50 or less. Among the amino compounds, primary amines are preferable. Secondary amines wherein a nitrogen atom of an amino group does not form a ring are desirable.

In this invention, the catalyst used is a zero-valent complex or a divalent organic compound of palladium. Concrete examples thereof include tris(dibenzylideneacetone) dipalladium (O), tris(tribenzylideneacetylacetone) tripalladium (O), tetrakis(triphenylphosphine) palladium (O), palladium acetate, palladium propionate, palladium butyrate, palladium benzoate and palladium acetylacetonate.

The ligand used in the palladium complex is a monodentate or multidentate electron donor compound having an element of Group V of the periodic table as a ligand atom. Concrete examples of the ligand include nitrogen compounds such as pyridine, quinoline, trimethylamine, triethylamine, tributylamine, α,α'-dipyridyl, 1,10-phenanthroline and N,N,N',N'-tetramethylethylenediamine; phosphorus compounds such as triethylphosphine, tri-n-butylphosphine, tri-n-dodecylphosphine, triphenylphosphine, tri-o-tolylphosphine, tri-p-biphenylphosphine, tri-o-methoxyphenylphosphine, phenyldiphenoxyphosphine, triethyl

phosphite, tri-n-butyl phosphite, tri-n-hexyl phosphite, triphenyl phosphite, tri-o-tolyl phosphite, triphenylthio phosphite, α,β-ethylene-di-(diphenyl)phosphine, α,β-ethylene-di-(dibutyl))phosphine, and α,γ-propylene-di(diphenyl)phosphine; arsenic compounds such as triethylarsenic, tributylarsenic and triphenylarsenic; and antimony compounds such as tripropylantimony and triphenylantimony. Of these, the phosphorous compounds are preferable in the aspects of activity selectivity and economics.

The amount of the ligand used is not necessarily fixed depending on the type, but is usually not more than 50 mols, preferably 20 to 20 mols per mol of palladium.

The amount of the catalyst in this invention is properly selected. Said amount is usually such that the amount of the palladium complex or compound is 0.01 to 10 mols, preferably 0.1 to 5 mols per 100 mols of the protected amino compound. This amount is found when the number of the protective group is 1. In case of the protected amino compound having two or more protective groups, the amount is increased depending on the number of the protective groups. The palladium metal and the ligand may previously be reacted. Usually, the catalyst is prepared by contacting the respective catalyst components in the reaction system.

The reaction in this invention is performed by contacting the protected amino compound with the catalyst in the presence of the formic acid compound selected from formic acid and salts thereof. By this reaction the protected amino group is deprotected, and an olefin corresponding to the 2-alkenyl group and carbon dioxide gas are concurrently formed as by-products.

Concrete examples of the formic acid compound used include formic acid, ammonium formate, monomethylamine formate, dimethylamine formate, trimethylamine formate, triethylamine formate, triethanoloamine formate, morpholine formate, pyridine formate, sodium formate, potassium formate and calcium formate. Of these, formic acid, ammonium formate and formic acid lower amine salts are preferable in view of the ease of removal after the reaction and economics.

The amount of the formic acid compound is properly selected. It is usually one or more mols, preferably 2 to 5 mols per mol of the protected amino group of the starting material.

The method of adding such formic acid compound is not limited in particular. For example, the formic acid compound is added at the stage of preparing the catalyst, at the time the reaction starts, or during the reaction. It is also possible that the formic acid compound is added in two or more divided portions as occasion demands. When a metal salt of formic acid is employed, it is advisable for increasing reactivity that said metal salt of formic acid is fed in the form of an aqueous solution or water is present in the reaction system.

A diluent can be present in the reaction. Concrete examples of the diluent include nitriles such as acetonitrile, propionitrile, butyronitrile and benzonitrile; amines such as dimethylformamide, diethylformamide, dimethylacetamide, dimethylpropioamide and n-methylpyrrolidone; ethers such as tetrahydrofuran, dioxane, dibutyl ether and ethylene glycol dimethyl ether; ketones such as acetone, methyl ethyl ketone, methyl isobutyl ketone and cyclohexanone; esters such as methyl acetate, ethyl acetate, propyl acetate and ethyl propionate; alcohols such as ethanol, propanol, tert.-butanol, ethylene glycol and diethylene glycol monoethyl ether; sulfoxides such as dimethyl sulfoxide and diethyl sulfoxide; and hydrocarbons such as n-hexane, cyclohexane, benzene, toluene and xylene. Of these, the nitriles, the amides, the ethers, the ketones, the esters and the alcohols are preferable. Water may properly be present.

The diluent is commonly used at such ratio that the concentration of the protected amino group reaches 1 to 50% by weight. The diluent can improve reactivity, selectivity and stability of the catalyst.

The other reaction conditions can properly be chosen. The reaction temperature is usually 0°C or above, preferably 10 to 150°C, and the reaction time is usually 5 minutes to 20 hours.

After the reaction teminates, the deprotected amino compound is separated from the reaction mixture and the amino compound of high purity is thus obtained. The formic acid compound remaining in the system can easily be removed by vacuum distillation, weak alkali treatment or water-washing. The subsequent treatment may be performed by a usual method such as a method wherein the compound is extracted with a solvent and the extract is then dried, a method wherein the compound is separated by distillation or a method wherein the compound is recrystallized.

The thus obtained amino compounds are, for example, aliphatic amines, alicyclic amines, aromatic amines, amino acids, peptides, glycoproteins, aminoglycosides, alkaloids, nucleosides, nucleotides and various heterocyclic compounds. These compounds are available as medicines, agricultural chemicals, industrial chemicals and intermediates thereof.

According to this invention, the intended amino compounds can be obtained in good efficiency by a simple operation without forming by-products hard to separate. The process of this invention moreover has the advantage that, since the reaction conditions are moderate, racemization does not occur even if using optically active amino acids.

The following Examples illustrate this invention in more detail.

## Example 1

A reaction vessel was charged with 1 millimol of N-allyloxycarbonylcyclohexylamine, 6.2 millimols of tetrahydrofuran, 0.05 millimol of dipalladium tris(dibenzylideneacetone)-chloroform complex, 0.2 millimol of triphenylphosphine and 4 millimols of formic acid, and the mixture was stirred at 30°C for 3 hours under nitrogen atmosphere.

After stirring, the solvent and the remaining formic acid were distilled off under reduced pressure. The content was dissolved in ether and washed with an aqueous solution containing a small amount of sodium hydroxide to recover the resulting cyclohexylamine. The yield was, when measured by gas chromatography, found to be 98 mol%.

Example 2

The procedure in Example 1 was repeated except that N-allyloxycarbonyldiisopropylamine was used as a protected amino compound and the reaction time was changed to 1 hour. As a result, diisopropylamine was obtained in a yield of 97 mol%.

Example 3

The procedure in Example 1 was repeated except that an amino acid having an amino group protected with an allyloxycarbonyl group was used as a protected amino compound and the reaction time was changed as shown in Table 1.

After the reaction, the remaining formic acid and the solvent were distilled off under reduced pressure to obtain a solid product. Subsequently, the solid product was washed with tetrahydrofuran and then with ether to obtain a nearly pure amino acid.

The resulting amino acid was measured for specific rotation under given conditions shown in Table 1 (C indicates a concentration, $H_2O$ an aqueous solution and HCl a hydrochloric acid aqueous solution, respectively). When the measured value was compared with a value described in the literature, it was ascertained that racemization did not occur.

Table 1

| Run No. | Protected amino compound | Reaction time (hr) | Product | Specific rotation | Yield (mol%) |
|---|---|---|---|---|---|
| 1 | N-allyloxycarbonyl-glycine | 1 | Glycine | - | 90 |
| 2 | N-allyloxycarbonyl-phenylalanine | 2 | L-phenyl-alanine | $[\alpha]_D^{23}$ = -33.9° (C=1, $H_2O$) | 76 |
| 3 | N-allyloxycarbonyl-leucine | 3 | L-leucine | $[\alpha]_D^{23}$ = +14.9° (C=2, 6N HCl) | 86 |
| 4 | N-allyloxycarbonyl-methionine | 3 | L-methionine | $[\alpha]_D^{25}$ = +25.3° (C=3, 1N HCl) | 74 |

Example 4

The procedure in Example 1 was followed except that ammonium formate was used instead of formic acid. Cyclohexylamine was obtained in a yield of 95 mol%.

Example 5

The procedure in Example 1 was followed except that triethylamine formate was used instead of formic acid. Cyclohexylamine was obtained in a yield of 97 mol%.

Example 6

The procedure in Example 1 was followed except that tributylphosphine was used as a ligand instead of n-triphenylphosphine. Approximately the same results as in Example 1 were obtained.

Example 7

A reaction vessel was charged with 5 millimols of N-allyloxycarbonylhexylamine, 40 millimols of

tetrahydrofuran, 0.3 millimol of palladium acetate, 0.6 millimol of triphenylphosphine and 20 millimols of formic acid, and the reaction was performed as in Example 1. There resulted hexylamine in a yield of 95 mol%.

## Claims

1. A process for the removal of the N-protecting group in compounds having one or more primary or secondary amino groups protected with a 2-alkenyloxycarbonyl group via a palladium catalyzed reaction, characterized in that the protected amino compound is deprotected in contact with a zero-valent complex or a divalent organic compound of palladium as a catalyst in the presence of formic acid or salts thereof.

2. The process of claim 1 wherein the formic acid salt is ammonium formate or a formic acid lower amine salt.

3. The process of claim 1 wherein at least one mole of formic acid or a salt thereof per mole of protected amino group is used.

4. The process of claim 1 wherein the palladium complex or the palladium compound is used in an amount of 0.01 to 10 mols per 100 mols of the protected amino compound.

5. The process of claim 1 wherein the palladium complex comprises as an electron donating ligand a phosphorus compound.

6. The process of claim 1 wherein the 2-alkenyl group of the 2-alkenyloxycarbonyl group has not more than 10 carbon atoms.

7. The process of claim 1 wherein the amino compound to be deprotected is a compound having a molecular weight of not more than 5,000.

8. The process of claim 7 wherein the amino compound has not more than 100 carbon atoms.

9. The process of claim 7 wherein the amino compound is an aliphatic amino compound, an alicyclic amino compound, an aromatic amino compound or a heterocyclic amino compound.

10. The process of claim 1 wherein the reaction is carried out in the presence of a diluent.

11. The process of claim 1 wherein the reaction is carried out at a temperature of 0°C or above for 5 minutes to 20 hours.

## Patentansprüche

1. Verfahren zur Entfernung der N-Schutzgruppe in Verbindungen, die eine oder mehrere primäre oder sekundäre Aminogruppen, die mit einer 2-Alkenyloxycarbonylgruppe geschützt ist, enthalten, mittels einer durch Palladium katalysierten Reaktion, dadurch gekennzeichnet, daß die Schutzgruppe von der geschützten Aminoverbindung in Kontakt mit einem nullwertigen Komplex oder einer zweiwertigen organischen Verbindung von Palladium als Katalysator in Anwesenheit von Ameisensäure oder ihren Salzen abgespalten wird.

2. Verfahren nach Anspruch 1, dadurch gekennzeichnet, daß als Ameisensäuresalze Ammoniumformiat oder das Ameisensäuresalz eines neidrigen Amins verwendet wird.

3. Verfahren nach Anspruch 1, dadurch gekennzeichnet, daß mindestens ein mol Ameisensäure oder eines ihrer Salze pro mol geschützter Aminogruppe verwendet wird.

4. Verfahren nach Anspruch 1, dadurch gekennzeichnet, daß der Palladiumkomplex oder die Palladiumverbindung in einer Menge von 0,01 bis 10 mol pro 100 mol der geschützen Aminogruppe verwendet wird.

5. Verfahren nach Anspruch 1, dadurch gekennzeichnet, daß der Palladiumkomplex als Elektronen-Donorligand eine Phosphorverbindung enthält.

6. Verfahren nach Anspruch 1, dadurch gekennzeichnet, daß die 2-Alkylgruppe der 2-Alkenyloxycarbonylgruppe nicht mehr als 10 Kohlenstoffatome enthält.

7. Verfahren nach Anspruch 1, dadurch gekennzeichnet, daß die Aminoverbindung, deren Schutzgruppe abgespalten werden soll, eine Verbindung mit einem Molekulargewicht von nicht mehr als 5.000 ist.

8. Verfahren nach Anspruch 7, dadurch gekennzeichnet, daß die Aminoverbindung nicht mehr als 100 Kohlenstoffatome enthält.

9. Verfahren nach Anspruch 7, dadurch gekennzeichnet, daß die Aminoverbindung eine aliphatische Aminoverbindung, eine alicyclische Aminoverbindung, eine aromatische Aminoverbindung oder eine heterocyclische Aminoverbindung ist.

10. Verfahren nach Anspruch 1, dadurch gekennzeichnet, daß die Reaktion in Anwesenheit eines Verdünnungsmittels durchgeführt wird.

11. Verfahren nach Anspruch 1, dadurch gekennzeichnet, daß die Reaktion bei einer Temperatur von 0°C oder darüber während 5 Minuten bis 20 Stunden durchgeführt wird.

## Revendications

1. Procédé pour éliminer le radical protecteur de l'azote dans de composés contenant un ou plusieurs radicaux amino, primaires ou secondaires, protégés par un radical (alcène-2 yl)-oxy-carbonyle, au moyen

d'une réaction catalysée par du palladium, procédé caractérisé en ce que le composé aminé protégé est "déprotégé" au contact d'un catalyseur qui est un complexe non-valent ou un composé organique bivalent du palladium, en présence d'acide formique ou de sels de celui-ci.

2. Procédé selon la revendication 1 dans lequel le sel de l'acide formique est le formiate d'ammonium ou un formiate d'amine inférieure.

3. Procédé selon la revendication 1 dans lequel on utilise au moins une mole d'acide formique ou d'un sel de celui-ci par mole de radical amino protégé.

4. Procédé selon la revendication 1 dans lequel le complexe du palladium ou le composé du palladium est mis en jeu en une quantité de 0,01 à 10 mol pour 100 mol du composé aminé protégé.

5. Procédé selon la revendication 1 dans lequel le complexe du palladium comprend, comme coordinate donneur d'électrons, un composé du phosphore.

6. Procédé selon la revendication 1 dans lequel le radical alcène-2 yle du radical (alcène-2 yl)-oxycarbonyle ne contient pas plus de 10 atomes de carbone.

7. Procédé selon la revendication 1 dans lequel le composé aminé à "déprotéger" est un composé qui a une masse moléculaire d'au plus 5000.

8. Procédé selon la revendication 7 dans lequel le composé aminé contient au plus 100 atomes de carbone.

9. Procédé selon la revendication 7 dans lequel le composé aminé est un composé aminé aliphatique, un composé amine alicyclique, un composé aminé aromatique ou un composé aminé hétérocyclique.

10. Procédé selon la revendication 1 dans lequel la réaction est effectuée en présence d'un diluant.

11. Procédé selon la revendication 1 dans lequel la réaction est effectuée à une température d'au moins 0°C pendant une durée de 5 minutes à 20 heures.